# EUROPEAN PATENT SPECIFICATION

(11) **EP 3 208 148 B1**
(45) Date of publication and mention of the grant of the patent: **01.08.2018**
(21) Application number: 16156452.1
(22) Date of filing: 19.02.2016
(51) Int. Cl.: B60Q 1/26, B60Q 1/46, B60J 5/10, E05F 15/622

(54) **SPINDLE DRIVE FOR A MOTOR VEHICLE**
SPINDELANTRIEB FÜR EIN KRAFTFAHRZEUG
MÉCANISME D'ENTRAÎNEMENT À BROCHE DESTINÉ À UN VÉHICULE AUTOMOBILE

(43) Date of publication of application: 23.08.2017
(73) Proprietor: U-Shin Deutschland Zugangssysteme GmbH, 85253 Erdweg (DE)
(72) Inventor: HRMONEIT, Franck, 85253 ERDWEG (DE)
(74) Representative: Gaillarde, Frédéric F. Ch.

(56) References cited:
- DE-A1-102006 030 986
- DE-A1-102010 006 211
- DE-A1-102012 024 690
- DE-A1-102014 005 570
- US-A1- 2005 073 852

## Description

The invention relates to a spindle drive for a motor vehicle and corresponding adjusting device and motor vehicle.

It is known to use an adjusting device having a spindle drive for automatically opening and closing an opening panel of a motor vehicle, such as a trunk.

The spindle drive comprises an outer tubular housing and an inner tubular housing, and is movably mounted between a closed position in which the inner tubular housing is retracted telescopically inside the outer tubular housing, and the opening panel is closed; and an open position in which the inner tubular housing is extended telescopically out of the outer tubular housing and the opening panel is opened The document DE 10 2012 024 690 A1 shows a spindle drive as known in the prior art. The adjusting device is often used in poorly lit environments. When the vehicle is to be loaded with an object such as a luggage placed on a loading zone, the lack of light may lead to a long search of a gripping part of the object.

In addition, little objects like a key, a card or coins, may fall from a pocket of a user in or around the loading zone and be lost or difficult to find because of the lack of light.

An object of the invention is to propose a spindle drive with an improved and efficient lighting device able to lighten and be focused on the loading zone, with low costs. Another object of the invention is to propose a spindle drive with a lighting device in which the lighting may be moved on to scan around the loading zone.

To this end the invention relates to a spindle drive extending along a center axis, configured to be connected to a body of a motor vehicle and to an opening panel,
the spindle drive comprising an outer tubular housing and an inner tubular housing,
the spindle drive being movably mounted between
- a closed position in which the inner tubular housing is retracted telescopically inside the outer tubular housing, and
- an open position in which the inner tubular housing is extended telescopically out of the outer tubular housing,
wherein the spindle drive comprises
- a lighting system comprising a first lighting device extending angularly along an angular section of less than 180° around the axis, and
- a rotational adjustment device configured to adapt the rotational position of the first lighting device around the axis.

Advantageously, the spindle drive of the invention improves the comfort and the security of a user at the loading zone. Indeed, the first lighting device of the spindle drive of the invention is able to be rotationally placed to illuminate in a desired zone such as to lighten the loading zone. In addition, the rotational adjustment device enables to move the first lighting device around the axis to focus its light on the desired zone.

In addition, the lighting system is efficient with low cost as the light is projected on a desired zone such as a loading zone and there is no light projected in zones with less interest, such as in the a direction opposite to the desired zone with respect to the axis.

The illumination of the loading zone also allows improving and simplifying the loading process. For instance, it allows detecting obstacle, and thus allows improving the safety of the user at the loading zone.

According to further embodiments which can be considered alone or in combination:
- the first lighting device is placed on the outer tubular housing; and/or
- the lighting system is configured to signal a start of a movement between the open position and the closed position, preferably from the open position to the closed position; and/or
- the first lighting device flickers to signal the start of a movement between the open position and the closed position; and/or
- the lighting system is configured to signal a confirmation of a programmed movement of the spindle drive between the open position and the closed position, preferably from the open position to the closed position; and/or
- the first lighting device is configured to make a first timed light to signal a confirmation of the programmed movement; and/or
- the lighting system is connected to an obstacle detector configured to detect an obstacle, such as an approaching person or object, and when the obstacle detector detects the obstacle, the lighting system signals the obstacle; and/or
- the lighting system comprises a second lighting device configured to make a second timed light to signal the obstacle; and/or
- the second timed light is in a colour different from the one of the first timed light; and/or
- the lighting system is connected to a warning signal device which is connected to a first warning light of a motor vehicle, and the lighting system is configured to signal an additional warning light; and/or
- the lighting system comprises a third lighting device configured to make a blinking light to signal the additional warning light; and/or
- the lighting system is configured to signal an open position of the spindle drive; and/or
- the lighting system comprises a third lighting device configured to make a dimmed light to signal an opened position of the spindle drive.

The invention also relates to an adjusting device for automatically opening and/or closing an opening panel of a motor vehicle, the adjusting device comprising a spindle drive according to the invention connected to the body of the motor vehicle and to the opening panel, wherein when the spindle drive is in the closed position, the opening panel is closed, and when the spindle drive is in the open position, the opening panel is opened.

According to an embodiment, the first lighting device is configured to illuminate a loading zone placed out of the motor vehicle.

The invention further relates to a motor vehicle comprising at least one adjusting device according to the invention.

Preferably, the motor vehicle comprises two adjusting devices according to the invention, wherein the first lighting devices are configured to be movably mounted between a focus position in which both first lighting devices illuminate a common zone, and a separate position in which the first lighting devices each illuminate a separate zone.

Other features and advantages of the present invention will become apparent from the following description of non-limitative embodiments, with reference to the attached drawings in which:
- figures 1A and 2 are space views of a spindle drive according to a preferred embodiment of the invention;
- figure 1B is a close view showing a portion of the spindle drive of figure 1.
- figure 3 is a side view of a motor vehicle comprising the spindle drive of figures 1A to 2;
- figures 4 to 8 are a back views of the motor vehicle of figure 3;

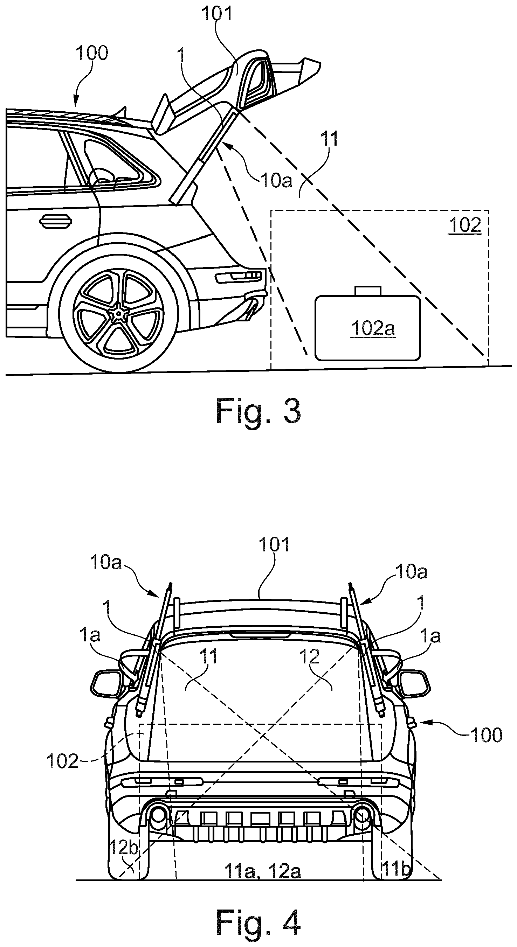

- figure 4 gives more details of a lighting system with two lighting devices illuminating a common zone;

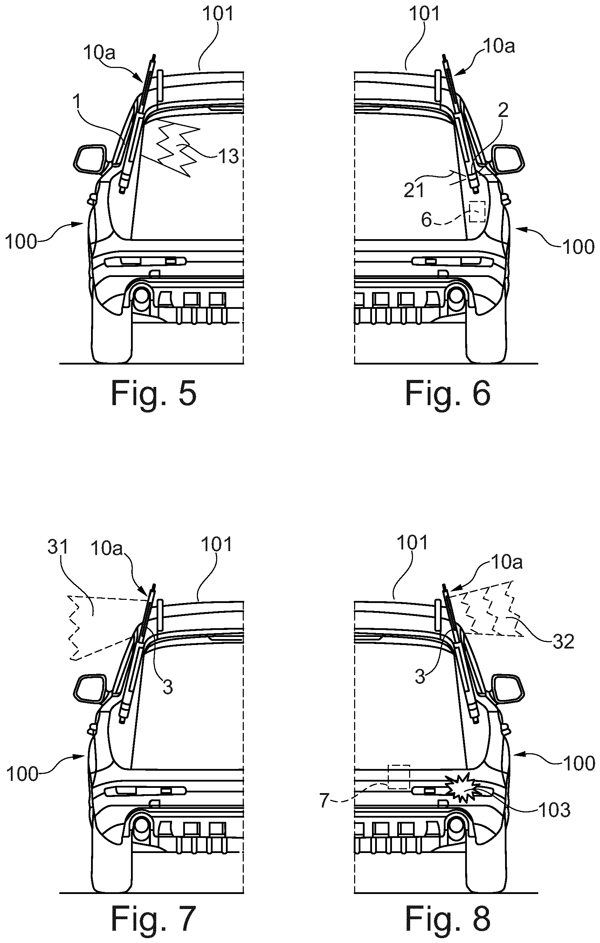

- figure 5 gives more details a lighting system making a first timed light to signal a confirmation of the programmed movement of the spindle drive;
- figure 6 gives more details of a lighting system making a second timed light to signal an approaching person or object;
- figure 7 gives more details of a lighting system making a dimmed light to signal an open position of the spindle drive, in particular of a trunk;
- figure 8 gives more details of a lighting system associated to a warning signal device.

Referring to the figures, the invention relates to a spindle drive 10 extending along a center axis A. In particular, the spindle drive 10 has a longitudinal shape about the axis A.

The spindle drive 10 is configured to be connected to a body of a motor vehicle 100 and to an opening panel 101.

The spindle drive 10 comprises an outer tubular housing 4 and an inner tubular housing 5. The spindle drive 10 is movably mounted between a closed position and an open position. The spindle drive movement results into the two extreme positions, more precisely into the closed position and the open position.

In the closed position, the inner tubular housing 5 is retracted telescopically inside the outer tubular housing 4. In the open position, the inner tubular housing 5 is extended telescopically out of the outer tubular housing 4. In particular, the length of the spindle drive 10 along the axis A is shorter in the closed position than in the open position.

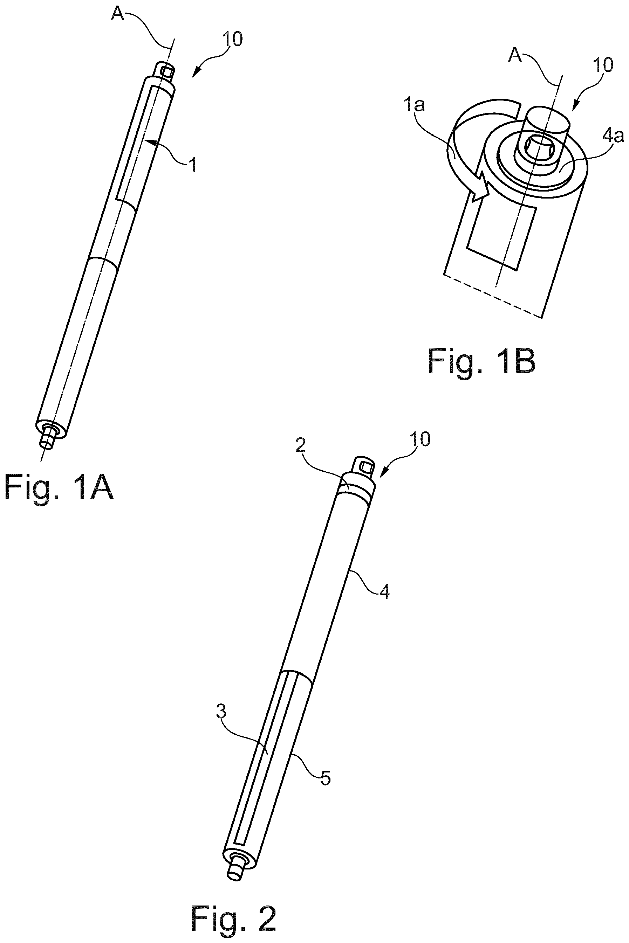

According to the invention, the spindle drive 10 comprises a lighting system and a rotational adjustment device 4a, best shown in figure 1B. The lighting system comprises a first lighting device 1, best shown in figure 1A, extending angularly along an angular section of less than 180° around the axis A.

The rotational adjustment device 4a is configured to adapt the rotational position of the first lighting device 1 around the axis A. In particular, the first lighting device 1 associated to the rotational adjustment device 4a, may be rotated around axis A according to arrow 1a of figure 1B.

Advantageously, the first lighting device 1 of the spindle drive 10 of the invention is able to be rotationally placed to illuminate in a desired zone such as to lighten the loading zone. In addition, the rotational adjustment device 4a enables to move the first lighting device 1 about the loading zone. Advantageously, such configuration allows providing an illumination area adapted for a user.

In addition, the lighting system is efficient with low cost as the light is projected on a desired zone such as a loading zone and there is no light projected in zones with less interest, such as in the a direction opposite to the desired zone with respect to the axis A.

According to an embodiment shown in figure 1A, the first lighting device 1 is placed on the outer tubular housing 4. Advantageously, this arrangement enables to illuminate efficiently around the spindle drive 10 when the spindle drive 10 is in the closed position.

As can be seen in figure 1A, the first lighting device 1 preferably extends according to the axis A along a major part of the length of the outer tubular housing 4. In particular, the first lighting device 1 extends along more than half of the longitudinal length of the outer tubular housing 4. This arrangement enables to have an extended light beam 11 or 12 as shown in figures 3 and 4.

According to an embodiment, the lighting system, in particular the first lighting device 1, is configured to signal a start of a movement between the open position and the closed position, preferably from the open position to the closed position. The first lighting device 1 may be configured to signal a start of a movement at intermediate positions between the open position and the closed position. Advantageously, this arrangement enables to alert persons that the spindle drive 10 is in course of opening or closing.

Preferably, the first lighting device 1 flickers to signal the start of a movement between the open position and the closed position.

According to an embodiment, the lighting system, in particular the first lighting device 1, is configured to signal a confirmation of a programmed movement of the spindle drive 10 between the open position and the closed position, preferably from the open position to the closed position. Advantageously, this arrangement enables to alert a user that an opening or closing command of a system comprising the spindle drive 10 is validated.

According to an embodiment best shown in figure 5, the first lighting device 1 is configured to make a first timed light 13 to signal a confirmation of the programmed movement.

Advantageously, a single lighting device 1 with different light signals, signals efficiently the opening or closing movement as well as a confirmation of the programmed movement. This aspect limits the cost of the spindle drive.

The lighting system may comprise two or more lighting devices, each being configured to signal or alert the user of a specific movement or state of the spindle drive 10.

According to an embodiment best shown in figure 6, the lighting system is connected to an obstacle detector 6 configured to detect an obstacle, for example an approaching person or object. The lighting system and the detector 6 are configured such that when the obstacle detector 6 detects the obstacle, the lighting system signals the obstacle. Advantageously, this arrangement enables to alert a user that person or an object such as a vehicle is approaching and avoiding collisions in this regard. This aspect increases the user's safety when using the spindle drive of a preferred embodiment.

According to an embodiment best shown in figures 2 and 6, the lighting system comprises a second lighting device 2 configured to make a second timed light 21 to signal the obstacle. Preferably, the second timed light 21 is in a colour different from the one of the first timed light 13. A second timed illumination of the second timed light 21 different from the one of the first timed light 13 may be used alternatively or in combination.

Advantageously, this arrangement enables a specific signal of the second lighting device 2 with respect to the first lighting device 1 in order for a user to differentiate the signals of the spindle drive. Moreover, having separately lighting devices mounted on a spindle drive allows having an illumination area personalized for a user.

According to an embodiment best shown in figure 7, the lighting system is configured to signal an open position of the spindle drive 10. Advantageously, this arrangement enables to alert persons that the spindle drive 10 is in the open position

According to an embodiment best shown in figures 2 and 7, the lighting system comprises a third lighting device 3 configured to make a dimmed light 31 to signal an opened position of the spindle drive 10.

According to an embodiment best shown in figure 8, the lighting system is connected to a warning signal device 7 which is connected to a first warning light 103 of a motor vehicle 100. In this embodiment, the lighting system is configured to signal an additional warning light. Advantageously, this arrangement enables increase the safety of a user waiting for a repair service or changing a tyre.

According to an embodiment best shown in figures 2 and 8, the lighting system may comprise another lighting device or the third lighting device 3, that is configured to make a blinking light 32 to signal the additional warning light. Advantageously, a blinking warning light is easily understood for the other road users, which increase further the safety of the user of the spindle drive 10 of the invention.

The invention further relates to an adjusting device 10a comprising a spindle drive according to the invention as shown in figures 4 to 8. In particular, the invention concerns an adjusting device 10a for automatically opening and/or closing an opening panel 101 of a motor vehicle 100. The adjusting device 10a comprises a spindle drive according to the invention connected to the body of the motor vehicle 100 and to the opening panel 101. The adjusting device is connected such that when the spindle drive 10 is in the closed position, the opening panel 101 is closed, and when the spindle drive 10 is in the open position, the opening panel 101 is opened.

As best shown in figure 4, the adjusting device 10a may be placed to illuminate on or around a desired zone in front of an opening panel 101 such as a tailgate or a trunk, for example a loading zone in front of the trunk.

The adjusting device 10a preferably has a body end connected to the body of the vehicle 100 and a panel end connected to the opening panel 101 of the vehicle 100.

According to an embodiment, the third lighting device 3 is placed by the panel end of the adjusting device 10a. This arrangement enables to signal by the top of the motor vehicle where the opening panel is a trunk to open upwardly as shown in figures 4 to 8.

According to an embodiment, the first lighting device 1 is configured to illuminate a loading zone 102 placed out of the motor vehicle 100. Advantageously, this arrangement enables to focus light 11, 12 on the loading zone 102 and see clearly objects 102a placed in the loading zone 102 without illuminating other zones around the vehicle 100.

According to an embodiment, the light system may be configured to signal a confirmation of a programmed opening panel position between an open position and a closed position of the opening panel 101 of the vehicle. In particular, the first lighting device 1 may be configured to make a first timed light 13 to signal a confirmation of the programmed opening panel position.

According to an embodiment, the light system may be connected to an obstacle detector 6 configured to detect an obstacle, such as an approaching person or an object, during the opening panel movement.

The invention also relates to a motor vehicle 100 comprising at least one adjusting device 10a according to the invention.

According to an embodiment, shown in figure 4, the motor vehicle comprises a two-sided system, namely comprises two, preferably identical, adjusting devices 10a according to the invention. One adjusting device 10a is placed on the right side of the motor vehicle, and the other adjusting device 10a is placed on the left side of the motor vehicle. Such two-sided system is used, for example, for heavy tailgates. The first lighting devices 1 are configured to be movably mounted between a focus position in which both first lighting devices 1 illuminate a common zone 11a, 12a, and a separate position in which the first lighting devices 1 each illuminate a separate zone 11b, 12b.

The same lighting devices 1 and/or 2 and/or 3 of both adjustment devices 10a are preferably synchronous in emitting light.

According to an embodiment, the motor vehicle 100 comprises a one-sided system, namely comprises one adjusting device. The adjusting device is placed on one side of the motor vehicle, either on the left side, or on the right side of the motor vehicle. On the other side, the motor vehicle comprises a gas spring, used as a counterbalance spring.

The invention has been described above with the aid of embodiments without limitation of the general inventive concept.

Many further modifications and variations will suggest themselves to those skilled in the art upon making reference to the foregoing illustrative embodiments, which are given by way of example only and which are not intended to limit the scope of the invention, that being determined solely by the appended claims.

In the claims, the word "comprising" does not exclude other elements, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. Spindle drive (10) extending along a center axis (A), configured to be connected to a body of a motor vehicle (100) and to an opening panel (101),
the spindle drive (10) comprising an outer tubular housing (4) and an inner tubular housing (5),
the spindle drive (10) being movably mounted between
- a closed position in which the inner tubular housing (5) is retracted telescopically inside the outer tubular housing (4), and
- an open position in which the inner tubular housing (5) is extended telescopically out of the outer tubular housing (4), the spindle drive (10) being **characterized in that** it comprises :
- a lighting system comprising a first lighting device (1) extending angularly along an angular section of less than 180° around the axis (A), and
- a rotational adjustment device (4a) configured to adapt the rotational position of the first lighting device (1) around the axis (A).

2. Spindle drive (10) according to the preceding claim, wherein the first lighting device (1) is placed on the outer tubular housing.

3. Spindle drive (10) according to any of the preceding claims, wherein the lighting system is configured to signal a start of a movement between the open position and the closed position

4. Spindle drive (10) according to the preceding claim, wherein the first lighting device (1) flickers to signal the start of a movement between the open position and the closed position.

5. Spindle drive (10) according to any of the preceding claims, wherein the lighting system is configured to signal a confirmation of a programmed movement of the spindle drive (10) between the open position and the closed position, preferably from the open position to the closed position.

6. Spindle drive (10) according to the preceding claim, wherein the first lighting device (1) is configured to make a first timed light (13) to signal a confirmation of the programmed movement.

7. Spindle drive (10) according to any of the preceding claims, wherein the lighting system is configured to be connected to an obstacle detector (6) configured to detect an obstacle, and wherein when the obstacle detector (6) detects an obstacle, the lighting system signals the obstacle.

8. Spindle drive (10) according to the preceding claim, wherein the lighting system comprises a second lighting device (2) configured to make a second timed light (21) to signal the obstacle.

9. Spindle drive (10) according to the preceding claim, claim 6 applying, wherein the second timed light (21) is in a colour different from the one of the first timed light (13).

10. Spindle drive (10) according to any of the preceding claims, wherein the lighting system is configured to signal an open position of the spindle drive (10).

11. Spindle drive (10) according to the preceding claim, wherein the lighting system comprises a third lighting device (3) configured to make a dimmed light (31) to signal the open position of the spindle drive (10).

12. Spindle drive (10) according to any of the preceding claims, wherein the lighting system is configured to be connected to a warning signal device (7) which is connected to a first warning light (103) of a motor vehicle (100), and wherein the lighting system is configured to signal an additional warning light.

13. Spindle drive (10) according to the preceding claim, wherein the lighting system comprises a third lighting device (3) configured to make a blinking light (32) to signal the additional warning light.

14. Motor vehicle (100) comprising an adjusting device (10a) for automatically opening and/or closing an opening panel (101) of said motor vehicle (100), the adjusting device (10a) comprising a spindle drive (10) according to any of the preceding claims connected to the body of the motor vehicle (100) and to the opening panel (101),
wherein when the spindle drive (10) is in the closed position, the opening panel (101) is closed, and
when the spindle drive (10) is in the open position, the opening panel (101) is opened.

15. Motor vehicle (100) according to the preceding claim, wherein the first lighting device is configured to illuminate a loading zone (102) placed out of the motor vehicle (100).

## Patentansprüche

1. Spindelantrieb (10), der sich entlang einer Mittelachse (A) erstreckt, dazu konfiguriert, mit einer Karosserie eines Kraftfahrzeugs (100) und mit einer Öffnungsklappe (101) verbunden zu werden,
wobei der Spindelantrieb (10) ein äußeres rohrförmiges Gehäuse (4) und ein inneres rohrförmiges Gehäuse (5) umfasst,
wobei der Spindelantrieb (10) beweglich montiert ist zwischen
- einer geschlossenen Stellung, in der das innere rohrförmige Gehäuse (5) teleskopartig innerhalb des äußeren rohrförmigen Gehäuses (4) eingezogen ist, und
- einer offenen Stellung, in der das innere rohrförmige Gehäuse (5) teleskopartig aus dem äußeren rohrförmigen Gehäuse (4) herausgezogen ist, wobei der Spindelantrieb (10) **dadurch gekennzeichnet ist, dass** er umfasst:
- ein Beleuchtungssystem, das eine erste Beleuchtungsvorrichtung (1) umfasst, die sich winkelmäßig entlang eines Winkelabschnitts von weniger als 180° um die Achse (A) herum erstreckt, und
- eine Drehverstellvorrichtung (4a), die so konfiguriert ist, dass sie die Drehstellung der ersten Beleuchtungsvorrichtung (1) um die Achse (A) herum anpasst.

2. Spindelantrieb (10) nach dem vorstehenden Anspruch, wobei die erste Beleuchtungsvorrichtung (1) am äußeren rohrförmigen Gehäuse platziert ist.

3. Spindelantrieb (10) nach einem der vorstehenden Ansprüche, wobei das Beleuchtungssystem so konfiguriert ist, dass es einen Beginn einer Bewegung zwischen der offenen Stellung und der geschlossenen Stellung signalisiert.

4. Spindelantrieb (10) nach dem vorstehenden Anspruch, wobei die erste Beleuchtungsvorrichtung (1) flackert, um den Beginn einer Bewegung zwischen der offenen Stellung und der geschlossenen Stellung zu signalisieren.

5. Spindelantrieb (10) nach einem der vorstehenden Ansprüche, wobei das Beleuchtungssystem so konfiguriert ist, dass es eine Bestätigung einer programmierten Bewegung des Spindelantriebs (10) zwischen der offenen Stellung und der geschlossenen Stellung, vorzugsweise von der offenen Stellung zur geschlossenen Stellung signalisiert.

6. Spindelantrieb (10) nach dem vorstehenden Anspruch, wobei die erste Beleuchtungsvorrichtung (1) so konfiguriert ist, dass sie ein erstes zeitgesteuertes Licht (13) erzeugt, um eine Bestätigung der programmierten Bewegung zu signalisieren.

7. Spindelantrieb (10) nach einem der vorstehenden Ansprüche, wobei das Beleuchtungssystem dazu konfiguriert ist, mit einem Hindernisdetektor (6) verbunden zu werden, der so konfiguriert ist, dass er ein Hindernis erkennt, und wobei, wenn der Hindernisdetektor (6) ein Hindernis erkennt, das Beleuchtungssystem das Hindernis signalisiert.

8. Spindelantrieb (10) nach dem vorstehenden Anspruch, wobei das Beleuchtungssystem eine zweite Beleuchtungsvorrichtung (2) umfasst, die so konfiguriert ist, dass sie ein zweites zeitgesteuertes Licht (21) erzeugt, um das Hindernis zu signalisieren.

9. Spindelantrieb (10) nach dem vorstehenden Anspruch unter Anwendung von Anspruch 6, wobei das zweite zeitgesteuerte Licht (21) in einer Farbe vorliegt, die sich von derjenigen des ersten zeitgesteuerten Lichts (13) unterscheidet.

10. Spindelantrieb (10) nach einem der vorstehenden Ansprüche, wobei das Beleuchtungssystem so konfiguriert ist, dass es eine offene Stellung des Spindelantriebs (10) signalisiert.

11. Spindelantrieb (10) nach dem vorstehenden Anspruch, wobei das Beleuchtungssystem eine dritte Beleuchtungsvorrichtung (3) umfasst, die so konfiguriert ist, dass sie ein gedimmtes Licht (31) erzeugt, um die offene Stellung des Spindelantriebs (10) zu signalisieren.

12. Spindelantrieb (10) nach einem der vorstehenden Ansprüche, wobei das Beleuchtungssystem dazu konfiguriert ist, mit einer Warnsignalvorrichtung (7) verbunden zu werden, die mit einem ersten Warnlicht (103) eines Kraftfahrzeugs (100) verbunden ist, und wobei das Beleuchtungssystem so konfiguriert ist, dass es ein zusätzliches Warnlicht signalisiert.

13. Spindelantrieb (10) nach dem vorstehenden Anspruch, wobei das Beleuchtungssystem eine dritte Beleuchtungsvorrichtung (3) umfasst, die so konfiguriert ist, dass sie ein Blinklicht (32) erzeugt, um das zusätzliche Warnlicht zu signalisieren.

14. Kraftfahrzeug (100), das eine Verstellvorrichtung (10a) zum automatischen Öffnen und/oder Schließen einer Öffnungsklappe (101) des Kraftfahrzeugs (100) umfasst, wobei die Verstellvorrichtung (10a) einen Spindelantrieb (10) nach einem der vorstehenden Ansprüche umfasst, der mit der Karosserie des Kraftfahrzeugs (100) und mit der Öffnungsklappe (101) verbunden ist,
wobei wenn sich der Spindelantrieb (10) in der geschlossenen Stellung befindet, die Öffnungsklappe (101) geschlossen ist, und
wenn sich der Spindelantrieb (10) in der offenen Stellung befindet, die Öffnungsklappe (101) geöffnet ist.

15. Kraftfahrzeug (100) nach dem vorstehenden Anspruch, wobei die erste Beleuchtungsvorrichtung so konfiguriert ist, dass sie eine Ladezone (102) beleuchtet, die außerhalb des Kraftfahrzeugs (100) platziert ist.

## Revendications

1. Entraînement à broche (10) s'étendant le long d'un axe central (A), configuré pour être relié à une carrosserie d'un véhicule automobile (100) et à un ouvrant (101),
l'entraînement à broche (10) comprenant un logement tubulaire externe (4) et un logement tubulaire interne (5),
l'entraînement à broche (10) étant monté de manière mobile entre
- une position fermée dans laquelle le logement tubulaire interne (5) est rétracté de manière télescopique à l'intérieur du logement tubulaire externe (4), et
- une position ouverte dans laquelle le logement tubulaire interne (5) s'étend de manière télescopique en dehors du logement tubulaire externe (4), l'entraînement à broche (10) étant **caractérisée en ce qu'**il comprend :
- un système d'éclairage comprenant un premier dispositif d'éclairage (1) s'étendant de manière angulaire selon une section angulaire inférieure à 180° autour de l'axe (A), et
- un dispositif de réglage rotatif (4a) configuré pour adapter la position de rotation du premier dispositif d'éclairage (1) autour de l'axe (A).

2. Entraînement à broche (10) selon la revendication précédente, dans lequel le premier dispositif d'éclairage (1) est placé sur le logement tubulaire externe.

3. Entraînement à broche (10) selon l'une des revendications précédentes, dans lequel le système d'éclairage est configuré pour signaler le début d'un mouvement entre la position ouverte et la position fermée.

4. Entraînement à broche (10) selon la revendication précédente, dans lequel le premier dispositif d'éclairage (1) clignote pour signaler le début d'un mouvement entre la position ouverte et la position fermée.

5. Entraînement à broche (10) selon l'une des revendications précédentes, dans lequel le système d'éclairage est configuré pour signaler une confirmation d'un mouvement programmé de l'entraînement à broche (10) entre la position ouverte et la position fermée, de préférence de la position ouverte à la position fermée.

6. Entraînement à broche (10) selon la revendication précédente, dans lequel le premier dispositif d'éclairage (1) est configuré pour produire une première lumière synchronisée (13) pour signaler une confirmation du mouvement programmé.

7. Entraînement à broche (10) selon l'une des revendications précédentes, dans lequel le système d'éclairage est configuré pour être relié à un détecteur d'obstacle (6) configuré pour détecter un obstacle,
et dans lequel, lorsque le détecteur d'obstacle (6) détecte un obstacle, le système d'éclairage signale l'obstacle.

8. Entraînement à broche (10) selon la revendication précédente, dans lequel le système d'éclairage comprend un deuxième dispositif d'éclairage (2) configuré pour produire une deuxième lumière synchronisée (21) pour signaler l'obstacle.

9. Entraînement à broche (10) selon la revendication précédente, en combinaison avec la revendication 6, dans lequel la deuxième lumière synchronisée (21) est d'une couleur différente de celle de la première lumière synchronisée (13).

10. Entraînement à broche (10) selon l'une des revendications précédentes, dans lequel le système d'éclairage est configuré pour signaler une position ouverte de l'entraînement à broche (10).

11. Entraînement à broche (10) selon la revendication précédente, dans lequel le système d'éclairage comprend un troisième dispositif d'éclairage (3) configuré pour produire une lumière atténuée (31) pour signaler la position ouverte de l'entraînement à broche (10).

12. Entraînement à broche (10) selon l'une des revendications précédentes, dans lequel le système d'éclairage est configuré pour être relié à un dispositif à signal d'avertissement (7) qui est relié à un premier voyant lumineux (103) d'un véhicule automobile (100), et dans lequel le système d'éclairage est configuré pour signaler un voyant lumineux supplémentaire.

13. Entraînement à broche (10) selon la revendication précédente, dans lequel le système d'éclairage comprend un troisième dispositif d'éclairage (3) configuré pour produire une lumière clignotante (32) pour signaler le voyant lumineux supplémentaire.

14. Véhicule automobile (100) comprenant un dispositif de réglage (10a) pour ouvrir et/ou fermer automatiquement un ouvrant (101) dudit véhicule automobile (100), le dispositif de réglage (10a) comprenant un entraînement à broche (10) selon l'une des revendications précédentes, relié à la carrosserie du véhicule automobile (100) et à l'ouvrant (101),
dans lequel, lorsque l'entraînement à broche (10) est dans la position fermée, l'ouvrant (101) est fermé, et
lorsque l'entraînement à broche (10) est dans la position ouverte, l'ouvrant (101) est ouvert.

15. Véhicule automobile (100) selon la revendication précédente, dans lequel le premier dispositif d'éclairage est configuré pour éclairer une zone de chargement (102) placée en dehors du véhicule automobile (100).
